# EUROPÄISCHE PATENTSCHRIFT

(11) **EP 3 469 195 B1**
(45) Veröffentlichungstag und Bekanntmachung des Hinweises auf die Patenterteilung: **17.06.2020**
(21) Anmeldenummer: 17717153.5
(22) Anmeldetag: 12.04.2017
(51) Int. Cl.: F01N 3/20

(54) **VERFAHREN ZUM ENTLEEREN EINES REDUKTIONSMITTELFÖRDERSYSTEMS EINES SCR-KATALYSATORS**
METHOD FOR EMPTYING A REDUCING AGENT DELIVERY SYSTEM BELONGING TO AN SCR CATALYTIC CONVERTER
PROCÉDÉ DE VIDAGE D'UN SYSTÈME DE REFOULEMENT D'AGENT RÉDUCTEUR D'UN CATALYSEUR SCR

(30) Priorität: 10.06.2016 DE 102016210262
(43) Veröffentlichungstag der Anmeldung: 17.04.2019
(73) Patentinhaber: Robert Bosch GmbH, 70442 Stuttgart (DE)
(72) Erfinder: REITER, Manuel Simon, 70376 Stuttgart (DE); RINGEISEN, Marc, 71126 Gaeufelden (DE); HACKERT, Annabel, 71229 Leonberg (DE)
(86) Internationale Anmeldenummer: PCT/EP2017/058730
(87) Internationale Veröffentlichungsnummer: WO 2017/211484

(56) Entgegenhaltungen:
- EP-A1- 1 836 379
- DE-A1-102009 029 408
- DE-A1-102011 076 429
- DE-A1-102013 210 858

## Beschreibung

Die vorliegende Erfindung betrifft ein Verfahren zum Entleeren eines Reduktionsmittelfördersystems eines SCR-Katalysators. Des Weiteren betrifft die vorliegende Erfindung ein Computerprogramm, das jeden Schritt des erfindungsgemäßen Verfahrens ausführt, wenn sie auf einem Rechengerät abläuft, sowie ein maschinenlesbares Speichermedium, welches das Computerprogramm speichert. Schließlich betrifft die Erfindung ein elektronisches Steuergerät, welches eingerichtet ist, um das erfindungsgemäße Verfahren auszuführen.

### Stand der Technik

Heutzutage wird bei der Nachbehandlung von Abgasen das SCR-Verfahren (Selective Catalytic Reduction) eingesetzt, um Stickoxide (NOx) im Abgas zu reduzieren. Eingesetzt wird das SCR-Verfahren schwerpunktmäßig in Kraftfahrzeugen. Hierbei wird eine Harnstoff-Wasser-Lösung (HWL), kommerziell auch als AdBlue® bekannt, in das sauerstoffreiche Abgas eingeführt. Hierfür wird ein Dosiermodul verwendet, das eine Düse umfasst, um die HWL in den Abgasstrom hinein zu sprühen. Überdies ist ein Dosierventil implementiert, das den Fluss durch das Dosiermodul steuern kann. Im SCR-Katalysator reagiert die HWL zu Ammoniak, welches sich anschließend mit den Stickoxiden verbindet, woraus Wasser und Stickstoff entsteht. Die HWL wird über ein Fördermodul aus einem Tank zum Dosiermodul gepumpt. Zusätzlich ist das Fördermodul über einen Rücklauf mit dem Tank verbunden, sodass überschüssige HWL zurückgeführt werden kann. Die HWL muss am Ende der Fahrt aus dem System entfernt werden, da sonst, vor allem bei niedrigen Außentemperaturen, ein Einfrieren der HWL droht, was zu einer Beschädigung des Fördermoduls führen kann. Üblicherweise wird das Fördermodul über die Förderleitung in den Tank entleert. Die Belüftung erfolgt in diesem Fall über das Dosiermodul und die Druckleitung. Jedoch kann in den ersten Sekunden des Entleerungsprozesses die Wasserkomponente der HWL verdampfen, was zum Auskristallisieren des Harnstoffs führt. Daraus kann eine Verstopfung des Dosiermoduls, insbesondere des Dosierventils, resultieren. Ist dies der Fall, ist die Entleerung des Fördermoduls über die Druckleitung nicht möglich und ein Druckausgleich kann nicht vollzogen werden

Die DE 10 2007 028 480 A1 beschreibt eine SCR-Vorrichtung wie oben dargestellt. Hierbei wird zusätzlich ein zweiter Vorratsbehälter für ein Reduktionsmittel angeschlossen, der zugeschaltet wird, sobald der erste Vorratsbehälter eine Minimalfüllmenge unterschreitet. Über eine Pumpe wird das Fluid zum Dosiermodul gefördert und kann über ein Rücklauf zurück in den Vorratsbehälter laufen. Das System kommt ohne Ventile in den aufgeführten Leitungen aus.

Die DE 102 54 981 A1 betrifft eine Vorrichtung zum Entfernen eines Reduktionsmittels aus einem SCR-System. Das System weist eine zusätzliche Druckluftpumpe, sowie zwei Steuerventile und eine Rückleitung auf. Beim Entleeren wird, in einem ersten Schritt, die Druckluftpumpe über ein Steuerventil so angeschlossen, dass sie zuerst das Dosierventil, entweder in die Mischkammer des Abgastraktes, oder in den Reduktionsmittelspeicher entleert. Im zweiten Schritt, wird die Druckluftpumpe, durch beide Steuerventile, in einer Weise angeschlossen, dass die Druckluftpumpe die Reduktionsmittelleitung, sowie die Rückleitung in den Reduktionsmittelspeicher entleeren kann. Die Anordnung im zweiten Schritt, ist dabei unabhängig vom Dosiermodul. Die Vorrichtung erlaubt somit die Entleerung eines Großteils des Systems, unabhängig vom Zustand des Dosiermoduls.

Die DE 10 2013 210 858 A1 betrifft in Verfahren zum Betreiben eines hydraulischen Förder- und Dosiersystems, insbesondere für ein Reduktionsmittel in einem SCR-System, welches einen Förderpfad und einen separaten Rücklaufpfad aufweist. In beiden Pfaden befinden sich jeweils eine Pumpe und zwei Rückschlagventile. Beim Entleeren des Systems saugt die Rücklaufpumpe den Förderpfad, sowie das Dosiermodul leer. Des Weiteren wird erwähnt, dass bei einem Defekt im Rücklaufpfad, der Druckausgleich über das Dosierventil stattfinden kann.

Auch die DE 10 2009 029408 A1 offenbart ein Verfahren zum Entleeren eines Reduktionsmittelfördersystems eines SCR-Katalysators.

### Offenbarung der Erfindung

Das Verfahren bezieht sich auf ein Reduktionsmittelfördersystem eines SCR-Katalysators welches eine Förderleitung und eine Rückförderleitung aufweist, die jeweils ein Fördermodul mit einem Reduktionsmitteltank verbinden, wobei die Rückförderleitung nicht in die Reduktionsmittellösung des Reduktionsmitteltanks getaucht wird. Außerdem weist es eine Druckleitung auf, welche das Fördermodul mit einem Dosierventil verbindet. Ein Umkehrventil kann zwischen zwei Positionen geschaltet werden. In einer ersten Position agiert das Fördermodul im Fördermodus, in einer zweiten Position kann in den Rückförderbetrieb des Fördermoduls umgeschaltet werden. Im Fördermodus wird Reduktionsmittellösung vom Reduktionsmitteltank über das Fördermodul in die Druckleitung gefördert und von dort zum Dosiermodul geleitet. Zudem wird ein Teil der Reduktionsmittellösung aus dem Fördermodul über die Rückförderleitung zurück in den Reduktionsmitteltank geleitet. Der Rückfördermodus wird zur Entleerung verwendet. Dabei wird die Reduktionsmittellösung aus dem System, mittels des Fördermoduls, in den Reduktionsmitteltank zurückgepumpt.

Zu Beginn wird in dem Verfahren eine Druckreduzierung in der Druckleitung eingeleitet. Dazu wird das Dosierventil, das den Fluss von Reduktionsmittel aus dem Dosiermodul durch die Druckleitung steuert, geschlossen. Zudem wird das Umschaltventil von einer ersten Position in eine zweite Position umgeschaltet, sodass das Fördermodul vom Fördermodus in den Rückförderbetrieb umgeschaltet wird. Nun startet der Entleerungsprozess. Durch das Schließen des Dosierventils und das Betreiben des Fördermoduls im Rückförderbetrieb wird ein Unterdruck in der Druckleitung erzeugt. Beim Öffnen des Dosiermoduls muss sichergestellt werden, dass in der Druckleitung kein Überdruck herrscht, um zu verhindern, dass Reduktionsmittellösung in den Abgasstrang tropft. Sobald ein Unterdruck erreicht wird, wird die Rückförderleitung über die Förderleitung in den Tank entleert. Durch Öffnen des Dosierventils, kann das Dosierventil und ein Teil der Druckleitung ebenfalls über die Förderleitung entleert werden, während die Entleerung der Rückförderleitung zeitgleich voranschreitet. Wird das Dosierventil geschlossen, wird ein definierter Zustand herbeigeführt und mithilfe des Unterdrucks kann die restliche Rückförderleitung, sowie das Fördermodul und die Förderleitung entleert werden. Dieses Entleerverfahren ist unabhängig von einer Kristallisation der Reduktionsmittellösung im Dosierventil, da die Kristallisation erst auftritt, wenn das Dosierventil bereits wieder geschlossen wurde. Der Druckausgleich nach der Entleerung erfolgt über die entleerte Rückförderleitung und den Reduktionsmitteltank.

Gemäß eines weiteren Aspekts kann vorgesehen werden, dass eine Pumpe im Fördermodul, nach dessen Umschalten in den Rückförderbetrieb, mit einer ersten Leistung betrieben wird. Die erste Leitung kann vorzugsweise zwischen einem Auslastungsgrad der Pumpe von 20% und 40% liegen. Dabei wird der Absolutdruck in der Druckleitung von einem Betriebsdruck bei 8,5 bar bis 11,5 bar auf einen Druck unter 1 bar abgesenkt. Unterschreitet der Druck in der Druckleitung einen ersten Druckschwellenwert, vorzugsweise über 1 bar und unter 2 bar, erfolgt der Entleerungsprozess. Die Pumpe wird nun mit einer zweiten Leistung betrieben, die größer als die erste ist. Vorzugsweise liegt diese Leitung in einem Bereich des Auslastungsgrads der Pumpe von 60% bis 100%. Dadurch kann effektiv ein Unterdruck erzeugt werden, der zu einer Entleerung der Rückführleitung führt.

Vorzugsweise wird die Druckleitung über die Förderleitung in den Reduktionsmitteltank entleert, wenn der Absolutdruck in der Druckleitung einen zweiten Druckschwellenwert unterschreitet. Auf diese Weise kann sichergestellt werden, dass kein Überdruck in der Druckleitung herrscht.

Ein weiterer Aspekt definiert einen ersten Zeitraum, nach dem das geöffnete Dosierventil wieder geschlossen wird. Dieser liegt vorzugsweise in einem Bereich von 3 Sekunden bis 15 Sekunden. Nach dem Schließen des Dosiermoduls ist es infolgedessen möglich die Rückförderleitung zu leeren. Des Weiteren kann das Fördermodul über die Förderleitung in den Reduktionsmitteltank entleert werden.

Vorzugsweise wird die Pumpe nach einem zweiten Zeitraum, nachdem die Rückförderleitung entleert wurde, abgeschaltet. Es ist bevorzugt, dass der zweite Zeitraum in einem Bereich zwischen 5 Sekunden und 15 Sekunden liegt. Zusätzlich kann das Umschaltventil wieder in die erste Position, also in den Förderbetrieb, geschaltet werden. Bevorzugt passiert dies nach einem vorgegebenen dritten Zeitraum, nach dem Abschalten der Pumpe. Der dritte Zeitraum kann vorzugsweise 3 Sekunden bis 10 Sekunden betragen. Dies hat den Vorteil, dass der Unterdruck, der im Fördermodul vorherrscht ausgeglichen werden kann. Der Druckausgleich erfolgt hierbei, anstatt über die Druckleitung und das Dosierventil, über die entleerte Rückförderleitung und den Reduktionsmitteltan k.

Das Computerprogramm ist eingerichtet, jeden Schritt des Verfahrens durchzuführen, insbesondere, wenn es auf einem Rechengerät oder Steuergerät durchgeführt wird. Es ermöglicht die Implementierung des Verfahrens in einem herkömmlichen elektronischen Steuergerät, ohne hieran bauliche Veränderungen vornehmen zu müssen. Hierzu ist es auf dem maschinenlesbaren Speichermedium gespeichert.

Durch Aufspielen des Computerprogramms auf ein herkömmliches elektronisches Steuergerät, wird das erfindungsgemäße elektronische Steuergerät erhalten, welches eingerichtet ist, um die Entleerung des Reduktionsmittelfördesystems eines SCR-Katalysators mittels des erfindungsgemäßen Verfahrens zu steuern.

### Kurze Beschreibung der Zeichnungen

Ausführungsbeispiele der Erfindung sind in den Zeichnungen dargestellt und in der nachfolgenden Beschreibung näher erläutert. Es zeigt:
Figur 1 schematisch ein Reduktionsmittelfördersystem eines SCR-Katalysators, das mittels eines Ausführungsbeispiels des erfindungsgemäßen Verfahrens entleert werden kann.
Figur 2 ein Ablaufdiagramm eines Ausführungsbeispiels des erfindungsgemäßen Verfahrens.
Figur 3 ein Diagramm des Drucks (oben), sowie der Schaltzustände (unten) des Umschaltventils und des Dosierventils und des Auslastungsgrads der Pumpe (unten) über die Zeit, gemäß einer Ausführungsform des erfindungsgemäßen Verfahrens.

### Ausführungsbeispiel der Erfindung

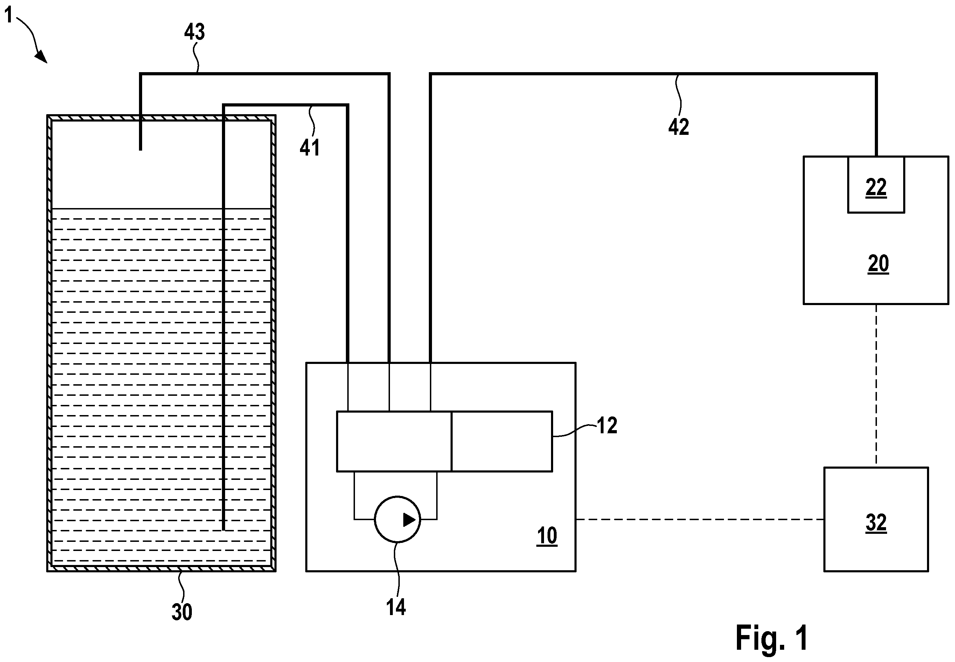

Ein Reduktionsmittelfördersystem 1 eines SCR-Katalysators ist in Figur 1 dargestellt. Es umfasst ein Fördermodul 10, welches mit einem Umschaltventil 12 gesteuert werden kann und eine Pumpe 14 umfasst. Des Weiteren umfasst das System ein Dosiermodul 20, das ein Dosierventil 22 umfasst, welches die Reduktionsmittellösung in einen Abgasstrom (nicht dargestellt) sprüht. Zudem umfasst das System einen Reduktionsmitteltank 30 und mehrere Leitungen. Eine Förderleitung 41 führt vom Reduktionsmitteltank 30 zum Fördermodul 10. Das Fördermodul ist über eine Druckleitung 42 mit dem Dosierventil 22 verbunden. Außerdem führt eine Rückförderleitung 43 vom Fördermodul 10 zurück in den Reduktionsmitteltank 30, wobei die Rückförderleitung 43 nicht in die Reduktionsmittellösung des Reduktionsmitteltanks 30 getaucht ist. Das Fördermodul 10, inklusive Umschaltventil 12 und das Dosierventil 22 werden über ein elektronisches Steuergerät 32 gesteuert.

Das Umschaltventil 12 kann zwei Positionen einnehmen. In einer ersten Position befindet sich das Reduktionsmittelfördersystem 1 im Fördermodus. Hierbei wird Reduktionsmittellösung von der Pumpe 14, aus dem Reduktionsmitteltank 30, über die Förderleitung 41, in das Fördermodul 10 gefördert und von dort aus weiter über die Druckleitung 42 zum Dosiermodul 20geführt, wo es durch da Dosierventil 22 in den Abgasstrom eingespritzt wird. Überschüssiges Reduktionsmittel im Fördermodul 10 kann über die Rückförderleitung 43 in den Reduktionsmitteltank 30 zurückgeführt werden. In einer zweiten Position des Umschaltventils 12 wird das Reduktionsmittelfördersystem 1 in einen Rückförderbetrieb geschalten. Dabei wird, gemäß einem Ausführungsbeispiel des erfindungsgemäßen Verfahrens, die Reduktionsmittellösung aus Dosiermodul 20, Fördermodul 10 sowie Druckleitung 42, Förderleitung 41, und Rückförderleitung 43, mittels des Fördermoduls 10, über die Förderleitung 41, in den Reduktionsmitteltank 30 gefördert.

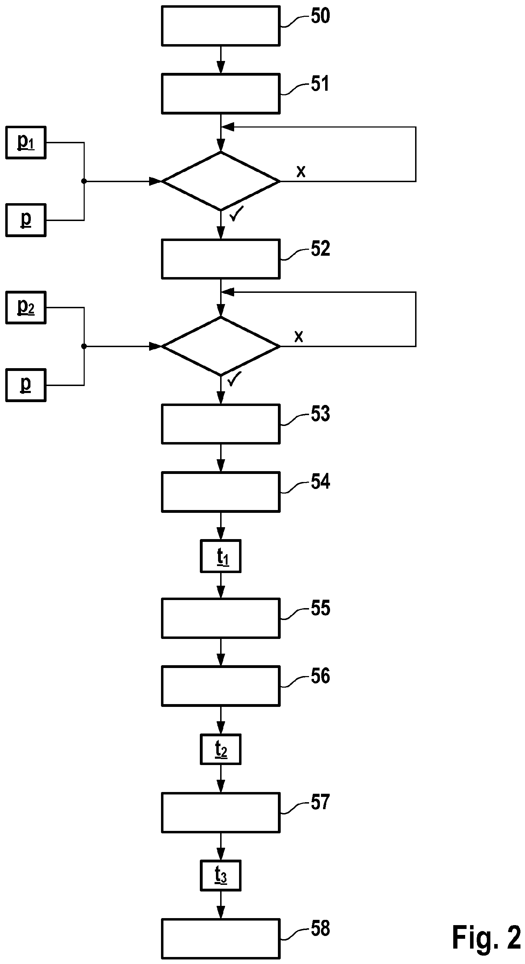

Figur 2 stellt ein Ablaufdiagramm des erfindungsgemäßen Verfahrens in einem Ausführungsbeispiel dar. In einem ersten Schritt 50 wird das Dosierventil geschlossen und eine Druckreduzierung in der Druckleitung 42 durchgeführt. Dazu wird das Umschaltventil 12, in einem zweiten Schritt 51, in die zweite Position geschaltet, sodass sich das Reduktionsmittelfördersystem 1 im Rückförderbetrieb befindet. Während des gesamten Entleerungsprozess bleibt das Umschaltventil 12 in der zweiten Position. Des Weiteren wird bei geschlossenem Dosierventil 22 die Pumpe 14 mit einer ersten Leistung betrieben. Diese entspricht einem Auslastungsgrad µ der Pumpe 14 von 25%.

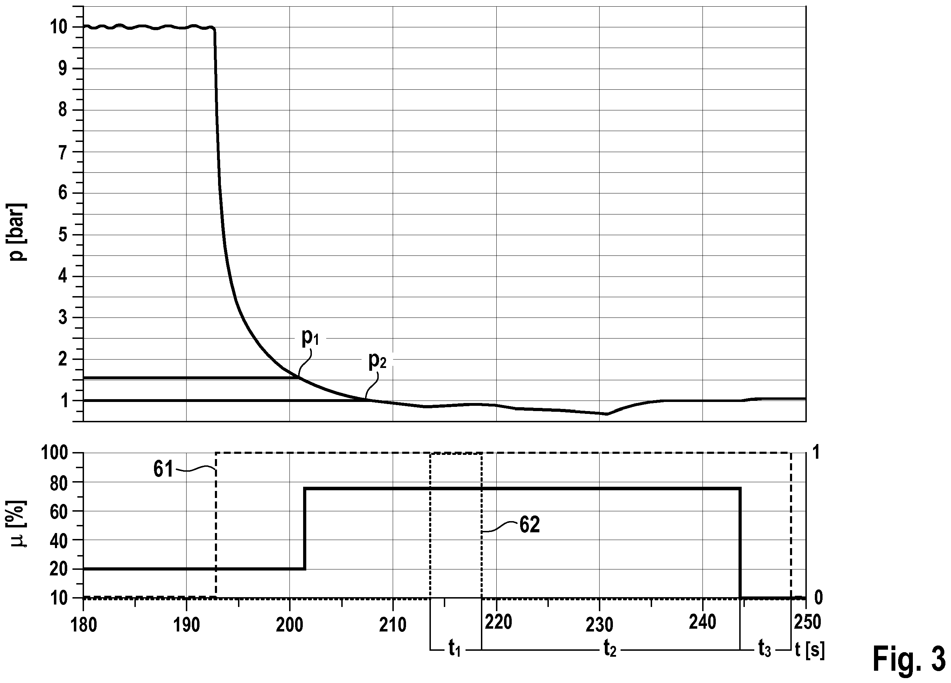

Unterschreitet der Absolutdruck p in der Druckleitung 42 einen ersten Druckschwellenwert p₁, der hier bei 1,6 bar liegt, (vergleiche Figur 3) wird ein dritter Schritt 52 ausgeführt. In dieser ersten Entleerungsphase wird die Pumpe 14 mit einer zweiten Leistung die dem Auslastungsgrad µ der Pumpe 14 von 75% entspricht, betrieben. Demzufolge ist die zweite Leistung höher als die erste Leistung. Infolge des geschlossenen Dosierventils 22 wird ein Unterdruck in der Druckleitung 42 aufgebaut und die Rückförderleitung 43, durch das Fördermodul 10 und die Förderleitung 41, in den Reduktionsmitteltank 30 entleert.

Sobald der Druck p in der Druckleitung 42 einen zweiten Druckschwellenwert p₂ erreicht, der 1 bar unterschreitet, (vergleiche Figur 3) wird das Dosierventil 22, in einem vierten Schritt 53, geöffnet und die zweite Entleerungsphase beginnt. In einer weiteren Ausführungsform kann der vierte Schritt 53 und somit die zweite Entleerungsphase auch nach einem vorher definierten Zeitraum nach dem dritten Schritt 52 ablaufen. Da nun Abgas aus dem Abgasstrang (nicht gezeigt) durch das Dosiermodul 20 und das Dosierventil 22 in die Druckleitung 42 strömen kann, sorgt die Pumpe 14 im fünften Schritt 54 für eine Entleerung der Druckleitung 42, des Dosiermoduls 20 und des Dosierventils 22, über das Fördermodul 10 und die Förderleitung 41, in den Reduktionsmitteltank 30. Währenddessen findet noch immer ein Reduktionsmittelfluss durch die Rückförderleitung 43 statt.

Die dritte Entleerungsphase, in einem sechsten Schritt 55, beginnt nach einem ersten Zeitraum t₁, der 5 Sekunden beträgt, nachdem das Dosierventil 22 im vierten Schritt 53 geöffnet wurde. Im sechsten Schritt 55 wird das Dosierventil 22 wieder geschlossen, bis der Entleerungsprozess abgeschlossen ist. Es folgt ein siebter Schritt 56, bei dem, ähnlich wie im dritten Schritt 52, die Rückförderleitung 43 in den Reduktionsmitteltank 30 entleert wird. Zusätzlich wird hierbei auch das Fördermodul 10 und die Rückförderleitung 43 über die Förderleitung 41 in den Reduktionsmitteltank 30 entleert.

Ein achter Schritt 57 folgt nach einem zweiten Zeitraum t₂ auf den siebten Schritt 56. In diesem findet der Druckausgleich statt, indem Luft über die Rückförderleitung 43 aus dem Reduktionsmitteltank 30 in das Reduktionsmittelfördersystem 1 strömt, so dass kein Unterdruck eingeschlossen wird.. Hierfür wird die Pumpe 14 abgeschaltet und der Druckausgleich findet über die entleerte Rückförderleitung 43, sowie den Reduktionsmitteltank 30 statt.

Gleichzeitig findet in einem achten Schritt 57 ein Druckausgleich statt Nach einem dritten Zeitraum t₃ wird das Umschaltventil 12, in einem neunten Schritt 58, wieder zurück in die erste Position geschaltet und das Reduktionsmittelfördersystem abgeschaltet.

In Figur 3 ist ein Diagramm gezeigt, in dessen oberen Teil, der Druck p über die Zeit dargestellt ist und der Schaltzustand 61 des Umschaltventils 12 und der Schaltzustand 62 des Dosierventils 22, sowie der Auslastungsgrad µ der Pumpe 14 im unteren Teil über die Zeit dargestellt sind. Hier werden insbesondere die Druckschwellenwerte p₁ und p₂, sowie die Zeiträume t₁, t₂ und t₃ verdeutlicht.

Im Betriebsmodus startet der Druck p bei einem Betriebsdruck von 10 bar. Der Schaltzustand 62 des Dosierventils 22 steht auf geschlossen, was hier durch eine 0 verdeutlicht wird. Außerdem befindet sich der Schaltzustand 61 des Umschaltventils 12 in der ersten Position. Der Auslastungsgrad µ der Pumpe 14 liegt bei 15%. Nach 24 Sekunden wird das Verfahren zur Entleerung gemäß dem Ablaufdiagramm gestartet. Dabei wird der Schaltzustand 61 des Umschaltventils 12 auf die zweite Position, also auf Rückförderbetrieb, umgeschaltet. Dabei erhöht sich der Auslastungsgrad µ der Pumpe 14 auf 25%. Die Druckreduzierung führt zu einem Abfallen der Drucks p von 10 bar bis unter 1 bar.

Ab einem ersten Druckschwellenwert p₁, der hier bei etwa 1,6 bar liegt, wird die Entleerung eingeleitet. Die Leistung der Pumpe 14 wird maximiert, was hier durch den Sprung des Auslastungsgrads µ der Pumpe 14 auf 75% gekennzeichnet ist. Der zweite Druckschwellenwert p₂ ist, in dieser Ausführungsform, beim Übergang des Drucks p zu einem Unterdruck, also unter 1 bar, und liegt bei einer Zeit von 40 Sekunden. Jetzt wird gemäß dem dritten Schritt 52 der Schaltzustand 62 des Dosierventils 22 auf 1 gestellt und somit das Dosierventil 22 geöffnet. Nach dem ersten Zeitraum t₁, wird der Schaltzustand 62 des Dosierventils 22 auf 0 zurückgestellt und somit das Dosierventil 22 wieder geschlossen. Der erste Zeitraum t₁ beträgt gemäß der Ausführungsform, die in der Figur 3 dargestellt ist, 5 Sekunden.

Der zweite Zweitraum t₂ beträgt in diesem Fall 26 Sekunden. Nach dieser Zeit wird die Pumpe ausgeschaltet, sodass der Auslastungsgrad µ der Pumpe 14 auf 0% fällt, wodurch der Entleerprozess abgeschlossen ist. Anschließend wird ein Druckausgleich über einen dritten Zeitraum t₃, der hier 5 Sekunden beträgt, durchgeführt. Nach diesem dritten Zeitraum t₃ wird der Schaltzustand 61 des Umschaltventils 12 auf die Position 1 zurückgesetzt und das Reduktionsmittelfördersystem 1 wird abgeschaltet. Der neunte Schritt 58 ist im Diagramm 3 bei 59 Sekunden dargestellt, sodass das gesamte Verfahren 35 in dieser Ausführungsform 35 Sekunden dauert.

## Patentansprüche

1. Verfahren zum Entleeren eines Reduktionsmittelfördersystems (1) eines SCR-Katalysators, welches eine Förderleitung (41) und eine Rückförderleitung (43) aufweist, die jeweils einen Reduktionsmitteltank (30) mit einem Fördermodul (10) verbinden, und eine Druckleitung (42), welche das Fördermodul (10) mit einem Dosierventil (22) verbindet, umfassend die aufeinander folgenden Schritte:
- Schließen (50) des Dosierventils (22);
- Umschalten des Fördermoduls (10) von einem Förderbetrieb zu einem Rückförderbetrieb durch Umschalten (51) eines Umschaltventils (12) von einer ersten Position in eine zweite Position;
- Rückfördern (52) einer Reduktionsmittellösung aus der Rückförderleitung (43) durch das Fördermodul (10) und die Förderleitung (41) in den Reduktionsmitteltank (30);
- Öffnen (53) des Dosierventils (22);
- Rückfördern (54) einer Reduktionsmittellösung aus dem Dosierventil (22) und der Druckleitung (42) durch die Förderleitung (41) in den Reduktionsmitteltank (30);
- Schließen (55) des Dosierventils;
- Entleeren (56) der Rückförderleitung und des Fördermoduls über die Förderleitung (41) in den Reduktionsmitteltank (30); und
- Durchführen eines Druckausgleichs (57) über die Rückförderleitung (43) aus dem Reduktionsmitteltank (30).

2. Verfahren nach Anspruch 1, **dadurch gekennzeichnet, dass** nach dem Umschalten (51) eine Pumpe (14) in dem Fördermodul (10) mit einer ersten Leistung betrieben wird, bis ein Druck (p) in der Druckleitung (42) einen ersten Druckschwellenwert (p₁) unterschreitet und die Pumpe (14) anschließend mit einer zweiten Leistung betrieben wird, die größer als die erste Leistung ist.

3. Verfahren nach Anspruch 1 oder 2, **dadurch gekennzeichnet, dass** das Öffnen (53) des Dosierventils (22) erfolgt, wenn ein Druck (p) in der Druckleitung (42) einen zweiten Druckschwellenwert (p₂) unterschreitet.

4. Verfahren nach einem der Ansprüche 1 bis 3, **dadurch gekennzeichnet, dass** das geöffnete Dosierventil (22) nach Ablauf eines vorgebbaren ersten Zeitraums (t₁) wieder geschlossen wird (55).

5. Verfahren nach Anspruch 4, **dadurch gekennzeichnet, dass** nach dem erneuten Schließen (55) des Dosierventils (22) die Pumpe (14) nach Ablauf eines vorgebbaren zweiten Zeitraums (t₂) abgeschaltet wird (56).

6. Verfahren nach Anspruch 5, **dadurch gekennzeichnet, dass** nach dem Abschalten (56) der Pumpe (14) das Umschaltventil (12) nach Ablauf eines vorgebbaren dritten Zeitraums (t₃) wieder in die erste Position geschaltet wird (58).

7. Computerprogramm, welches eingerichtet ist, jeden Schritt des Verfahrens nach einem der Ansprüche 1 bis 6 durchzuführen.

8. Maschinenlesbares Speichermedium, auf welchem ein Computerprogramm nach Anspruch 7 gespeichert ist.

9. Elektronisches Steuergerät (32), welches eingerichtet ist, um mittels eines Verfahrens nach einem der Ansprüche 1 bis 6 ein Reduktionsmittelfördersystem (1) eines SCR-Katalysators zu entleeren.

## Claims

1. Method for emptying a reducing agent delivery system (1) of an SCR catalytic converter which has a delivery line (41) and a return line (43), which each connect a reducing agent tank (30) to a delivery module (10), and a pressure line (42) which connects the delivery module (10) to a metering valve (22), comprising the successive steps:
- closing (50) the metering valve (22);
- changing over the delivery module (10) from a delivery operation to a return operation by changing over (51) a changeover valve (12) from a first position to a second position;
- returning (52) a reducing agent solution from the return line (43) into the reducing agent tank (30) through the delivery module (10) and the delivery line (41);
- opening (53) the metering valve (22);
- returning (54) a reducing agent solution from the metering valve (22) and the pressure line (42) into the reducing agent tank (30) through the delivery line (41);
- closing (55) the metering valve;
- emptying (56) the return line and the delivery module into the reducing agent tank (30) via the delivery line (41); and
- carrying out pressure equalization (57) via the return line (43) from the reducing agent tank (30).

2. Method according to Claim 1, **characterized in that**, after the changeover (51), a pump (14) in the delivery module (10) is operated with a first output until a pressure (p) in the pressure line (42) falls below a first pressure threshold value (p₁), and the pump (14) is then operated with a second output, which is greater than the first output.

3. Method according to Claim 1 or 2, **characterized in that** the opening (53) of the metering valve (22) is carried out when a pressure (p) in the pressure line (42) falls below a second pressure threshold value (p₂).

4. Method according to one of Claims 1 to 3, **characterized in that** the opened metering valve (22) is closed again (55) after a predefinable first time period (t₁) has elapsed.

5. Method according to Claim 4, **characterized in that**, following the renewed closure (55) of the metering valve (22), the pump (14) is switched off (56) after a predefinable second time period (t₂) has elapsed.

6. Method according to Claim 5, **characterized in that**, after the pump (14) has been switched off (56), the changeover valve (12) is switched (58) into the first position again after a predefinable third time period (t₃) has elapsed.

7. Computer program which is configured to carry out each step of the method according to one of Claims 1 to 6.

8. Machine-readable storage medium, on which a computer program according to Claim 7 is stored.

9. Electronic controller (32) which is configured to empty a reducing agent delivery system (1) of an SCR catalytic converter by means of a method according to one of Claims 1 to 6.

## Revendications

1. Procédé de vidage d'un système de débit d'agent réducteur (1) d'un catalyseur SCR, comprenant une conduite de débit (41) et une conduite de refoulement (43) qui relient chacune un réservoir d'agent réducteur (30) à un module de débit (10), et une conduite forcée (42) qui relie le module de débit (10) à une vanne de dosage (22), comprenant les étapes successives suivantes consistant à :
- fermer (50) la vanne de dosage (22) ;
- commuter le module de débit (10) d'un fonctionnement de débit à un fonctionnement de refoulement en commutant (51) une vanne de commutation (12) d'une première position à une deuxième position ;
- refouler (52) une solution d'agent réducteur à partir de la conduite de refoulement (43) à travers le module de débit (10) et la conduite de débit (41) dans le réservoir d'agent réducteur (30) ;
- ouvrir (53) la vanne de dosage (22) ;
- refouler (54) une solution d'agent réducteur à partir de la vanne de dosage (22) et de la conduite forcée (42) à travers la conduite de débit (41) dans le réservoir d'agent réducteur (30) ;
- fermer (55) la vanne de dosage ;
- vider (56) la conduite de refoulement et le module de débit à travers la conduite de débit (41) dans le réservoir d'agent réducteur (30) ; et
- effectuer une compensation de pression (57) à travers la conduite de refoulement (43) à partir du réservoir d'agent réducteur (30).

2. Procédé selon la revendication 1, **caractérisé en ce qu'**après la commutation (51), une pompe (14) fonctionne dans le module de débit (10) à une première puissance jusqu'à ce qu'une pression (p) dans la conduite forcée (42) passe en dessous d'une première valeur seuil de pression (p₁) et la pompe (14) fonctionne ensuite à une deuxième puissance supérieure à la première puissance.

3. Procédé selon la revendication 1 ou 2, **caractérisé en ce que** l'ouverture (53) de la vanne de dosage (22) est effectuée lorsqu'une pression (p) dans la conduite forcée (42) passe en dessous d'une deuxième valeur seuil de pression (p₂).

4. Procédé selon l'une quelconque des revendications 1 à 3, **caractérisé en ce que** la vanne de dosage ouverte (22) est refermée (55) à l'expiration d'une première période de temps (t₁) prédéfinissable.

5. Procédé selon la revendication 4, **caractérisé en ce qu'**après la refermeture (55) de la vanne de dosage (22), la pompe (14) est arrêtée (56) à l'expiration d'une deuxième période de temps (t₂) prédéfinissable.

6. Procédé selon la revendication 5, **caractérisé en ce qu'**après l'arrêt (56) de la pompe (14), la vanne de commutation (12) est commutée de nouveau sur la première position (58) à l'expiration d'une troisième période de temps (t₃) prédéfinissable.

7. Programme informatique configuré pour exécuter chaque étape du procédé selon l'une quelconque des revendications 1 à 6.

8. Support de stockage lisible par machine, sur lequel est stocké un programme informatique selon la revendication 7.

9. Contrôleur électronique (32) configuré pour vider un système de débit d'agent réducteur (1) d'un catalyseur SCR au moyen d'un procédé selon l'une quelconque des revendications 1 à 6.
